Europäisches Patentamt

European Patent Office

Office européen des brevets

(19)

(11) Publication number: 0 399 663
A1

# (12) EUROPEAN PATENT APPLICATION

(21) Application number: 90304471.7

(51) Int. Cl.⁵: G06F 15/72

(22) Date of filing: 25.04.90

(30) Priority: 25.04.89 GB 8909367

(43) Date of publication of application:
28.11.90 Bulletin 90/48

(84) Designated Contracting States:
DE FR GB IT

(71) Applicant: QUANTEL LIMITED
Pear Tree Lane
Newbury RG13 2LT(GB)

(72) Inventor: Kellar, Paul Roderic Noel
4 Essex Street
Newbury, Berkshire RG14 6QN(GB)
Inventor: Hinson, Neil Roy
Wetherlam, Ecchinswell
Newbury, Berkshire(GB)
Inventor: Mayer, Michael Terry
45 Mayfair Drive
Newbury, Berkshire RG14 6EE(GB)

(74) Representative: Milhench, Howard Leslie et al
R.G.C. Jenkins & Co. 26 Caxton Street
London SW1H 0RJ(GB)

(54) An electronic image progressing system.

(57) An electronic image processing system is arranged to divide image data into a plurality of regions. Image data is held in a store 26, 42 and a processor 23, 46 calculates a set of transformation data for each of the image regions. Image data for each region is transformed in accordance with the transformation data for the respective region and the transformed image regions are combined to produce data such that the image conforms with a non-planar surface. In one embodiment image data is input to the system via a manipulation store 26 and is transformed by an address generator 27 as it is written into a framestore 20. In another embodiment image data associated with a frame in a video sequence is held in a framestore 42 and is transformed by an address generator 43 as it is read from the framestore 42.

EP 0 399 663 A1

## AN ELECTRONIC IMAGE PROCESSING SYSTEM

### FIELD OF THE INVENTION

The invention relates to electronic image processing systems.

### BACKGROUND OF THE INVENTION

High definition electronic graphics systems are often used by artists to create new images by combining parts from different source images. Such systems have a major advantage over photographic techniques, in that they are quicker, interactive, and allow many more images to be produced per unit cost. The finished result is often a new image which is in effect an illusion representing something that as a whole never actually existed, except as a collection of separate components. The task of the user is therefore to make the illusion as convincing as possible.

In our European patent application published as EP-A-283,159 and corresponding US patent application no. 159,780 the teachings of which are incorporated herein by reference, techniques are described in which a planar image can be corrected for perspective, so that the image appears as if it has been moved in three-dimensional space. Such transformations are referred to herein as "planar transformations" and may be defined mathematically as:

$$x' = kx + 1y + mz + n$$
$$y' = px + qy + rz + s$$
$$z' = tx + uy + vz + w$$

where the variables x, y and z represent the co-ordinates of each point p of the input image, the variables $x'$, $y'$ and $z'$ represent the co-ordinates of each corresponding point $p'$ of the output image and the values k to w are parameters defining the transformation.

Given that the input image is planar, i.e. it is two-dimensional, the variable z is always zero and therefore the equations can be simplified to:

$$x' = kx + 1y + n$$
$$y' = px + qy + s$$
$$z' = tx + uy + w$$

Similarly, the output image is also two-dimensional and therefore the three-dimensional positions $x'$, $y'$ $z'$ of the image, as defined by the manipulation, must be projected back onto the two-dimensional plane of a viewing screen. The projection is made by producing, in two dimensions, an image of the three-dimensional manipulated image equivalent to that which a notional viewer would see at a predetermined position from the viewing screen, say X, Y, Z. Thus, for each point $P'$ in three-dimensional space there will be a corresponding point $P''(x'', y'')$ on the two-dimensional viewing screen, where:

$$x'' = \frac{x'Z + z'X}{Z + z'}$$

$$y'' = \frac{y'Z + z'Y}{Z + z'}$$

X, Y and Z are constants and therefore the equations for $x'$, $y'$ and $z'$ may be substituted into those for $x''$ and $y''$ giving:

$$x'' = \frac{ax + by + c}{gx + hy + j} \qquad (1)$$

$$y'' = \frac{dx + ey + f}{gx + hy + j} \qquad (2)$$

Electronic systems are known in which live video images (or real-time recordings thereof) can be manipulated in this way in real-time. The live video images can also be made to change position and shape

2

from one video field to the next by varying the manipulation equations on a field-by-field basis. In such system, the input video signal is digitised, to form digital words representing component signals (luminance, hue and saturation) and the digital words are written to a framestore. The framestore is subsequently read and (assuming no further digital processing is required) the output words are converted back to analogue video signals for display of the image. The abovementioned manipulation is achieved in such machines by performing the writing and the reading of words to and from the framestore in different orders. Reading from, or writing to, a framestore in raster order creates no particular difficulties, as framestores operating in this way have been available for some time for use as synchronising devices. However, where reading occurs in normal raster order then the system must be capable of performing the respective writing operation randomly or vice versa in order to be able to perform the abovementioned manipulation. This random reading or writing is a much more complex procedure and therefore systems are identified by their random side and are referred to as having write-side processors where the writing is random access or read-side processors where the reading is random access.

The above equations (1) and (2) are particularly suitable for write-side machines in which the output reading sequence is fixed to the raster scan and manipulation is achieved by writing pixel data to the randomly defined $x''$, $y''$ positions. Thus, once in the framestore, the manipulated data can be read in conventional raster order to produce a conventional video signal, with the manipulation being imparted onto the image before the data is stored in the framestore.

Writing data to a store in a random order is much more difficult than reading data randomly. Basically this difficulty arises because the random operation must occur while the video data is coming into the manipulating part of the system, unlike the read-side operation which already has a full frame of image data available in the framestore. To overcome this difficulty, substantially more hardware is required resulting in a very expensive system. However, such systems are available, an example being the system sold by the present Assignee under the trade mark "MIRAGE", which, to the Assignee's knowledge, is the only commercially available system capable of write-side processing. To justify the expense of a write-side system, it must be capable of creating effects which are not possible or are extremely difficult with a read-side system. Consequently, the MIRAGE works from three-dimensional data and does not rely on planar transformations as previously defined.

A read-side system which does use planar transformations to manipulate real-time video data is sold by the present Assignee under the trade mark "ENCORE". In a read-side system, data representing an input image is store in unmanipulated form and is output in a different raster order by randomly addressing locations in the framestore thereby to build up a new image. The order in which output co-ordinates $(x'', y'')$ are required is fixed, and for each point $P''$ forming part of the output, the position $(x, y)$ of point $P$ in the stored image must be calculated. Thus, the equation required for this is not the planar transform of $(x'', y'')$ in terms of $(x, y)$, but a reverse planar transform giving $(x, y)$ in terms of $(x'', y'')$.

The equations (1) and (2) defining a planar transform describe all transforms of this type and similarly the inverse planar transform, mapping $P''$ onto $P$, is itself a planar transform and may be written in the form, thus:

$$x = \frac{Ax'' + By'' + C}{Gx'' + Hy'' + J} \qquad (3)$$

$$y = \frac{Dx'' + Ey'' + F}{Gx'' + Hy'' + J} \qquad (4)$$

Planar transforms are very useful for changing the perspective of a planar image and, given the ease with which an inverse transform may be calculated, are very suitable for manipulations performed by read-side processing.

A problem arises, however, if the user wishes to perform an image manipulation consisting of more than simply just the movement of the image plane as a whole. Such a manipulation may be required for example, to create the effect of a reflection from a curved surface or to create the effect of a live video sequence superimposed onto a turning page of a book.

## OBJECTS AND STATEMENTS OF THE INVENTION

The present invention aims to provide an electronic image processing system in which a planar image can be transformed so as to appear as if placed on a non-planar surface.

The present invention resides in the realisation that an image can be made to appear to conform to a non-planar surface by dividing the image into a plurality of image regions or tiles and transforming each of the tiles individually. Each individual tile transformation can be arranged to be slightly different and this will cause the transformed tile to appear in its own position orientation. By careful selection of the tiles and the tile transformations the overall effect will be for the image to appear to conform to a non-planar surface.

According to one aspect of the invention therefore there is provided an electronic image processing system in which image data is divided into a plurality of regions, image data associated with each of said regions is transformed in accordance with a respective set of transformation data to produce data representing a transformed image region, and the data representing the transformed image regions are combined to produce transformed image data representing a transformed image which conforms with a non-planar surface.

The transformation data may be calculated by defining a planar grid defining a plurality of tiles representing the plurality of image regions, manipulating the grid in three-dimensional space to conform with the desired non-planar surface, and calculating for each tile in the grid the three-dimensional planar transform required to cause the tile to occupy the manipulated position in three-dimensional space.

According to another aspect of the invention there is provided a method of manipulating an electronically stored image to produce an output image by reading data from a randomly accessible storage device, wherein said output image is divided into a plurality of regions and image data for each of said regions is obtained from said stored data at addresses determined by transform parameters selected from one of a plurality of available parameter sets.

In the practice of this aspect of the invention the manipulation is achieved by reading data from a randomly addressable manipulation store, wherein each address is calculated in accordance with, (1) a mathematically defined transformation, and (2) the position of the transformed pixel in an output raster. Furthermore, a plurality of transformations are available and, for each predetermined one, a predetermined region of pixels in the output raster are identified for manipulation in accordance with that transformation.

Furthermore, the output image is divided into a plurality of tiles, each having a respective planar transformation defining the stored data which must be read in order to create that tile. A processor considers a particular parameter set and then accesses all data required to construct its respective tile, before moving on to the next parameter set. Tiles are built up by localised raster-type scans with a scan for each separation (RGB) of the image, for each tile.

In a further aspect the invention provides an electronic image processing system comprising:
a store defining an array of randomly addressable storage locations for storing pixels representing an image;
reading means for reading pixels from the store by addressing the storage locations and for outputting pixels in raster address sequence;
defining means for defining a plurality of image tiles associated with a corresponding plurality of patches of said output raster addresses, and for defining a parameter set for each image tile which parameter set defines a three-dimensional transform for transforming each raster address in a patch into a transformed address;
selecting means for selecting for each output raster address a parameter set relating to a desired three-dimensional transform to be performed on the raster address; and
transforming means for transforming the raster address to produce a transformed address in accordance with the selected set of parameters for identifying a store address;
and wherein said reading means is arranged to read pixels from store locations addressed by said transforming means such that pixels output therefrom represent the image on a non-planar surface.

The invention also provides an electronic image processing system comprising:
(a) an input source of pixels relating to successive addresses in an input raster;
(b) a store having an array of addresses for storing said pixels;
(c) a source of signals defining a multiplicity of tiles containing different patches of said raster addresses;
(d) a source of sets of parameters which respectively define three-dimensional transforms for the raster addresses contained in different tiles;
(e) means for selecting the respective parameter set for the tile containing the address of a pixel input from said input source;
(f) transforming means responsive to the selected parameter set for deriving the three-dimensional transform of the raster address of each input pixel in the respective tile; and
(g) means for writing said input pixel at the address in said framestore means identified by the respective transform, whereby an image represented by pixels input from said input source can appear to be transformed onto a three-dimensional surface.

The above and further features of the invention are set forth with particularly in the appended claims and together with advantages thereof will become clearer from consideration of the following detailed description of exemplary embodiments of the invention given with reference to the accompanying drawings.

## BRIEF DESCRIPTION OF THE DRAWINGS

Figure 1 is a schematic block diagram of a first system embodying the invention.

Figure 2 illustrates (a) an input image and (b) an output image transformed by the first system.

Figure 3 shows the relationship between boundaries before and after transformation by the first system.

Figure 4 is a schematic block diagram of a second system embodying the invention.

Figure 5 illustrates one frame of an exemplary effect possible in the second system.

## DETAILED DESCRIPTION OF EMBODIMENTS OF THE INVENTION

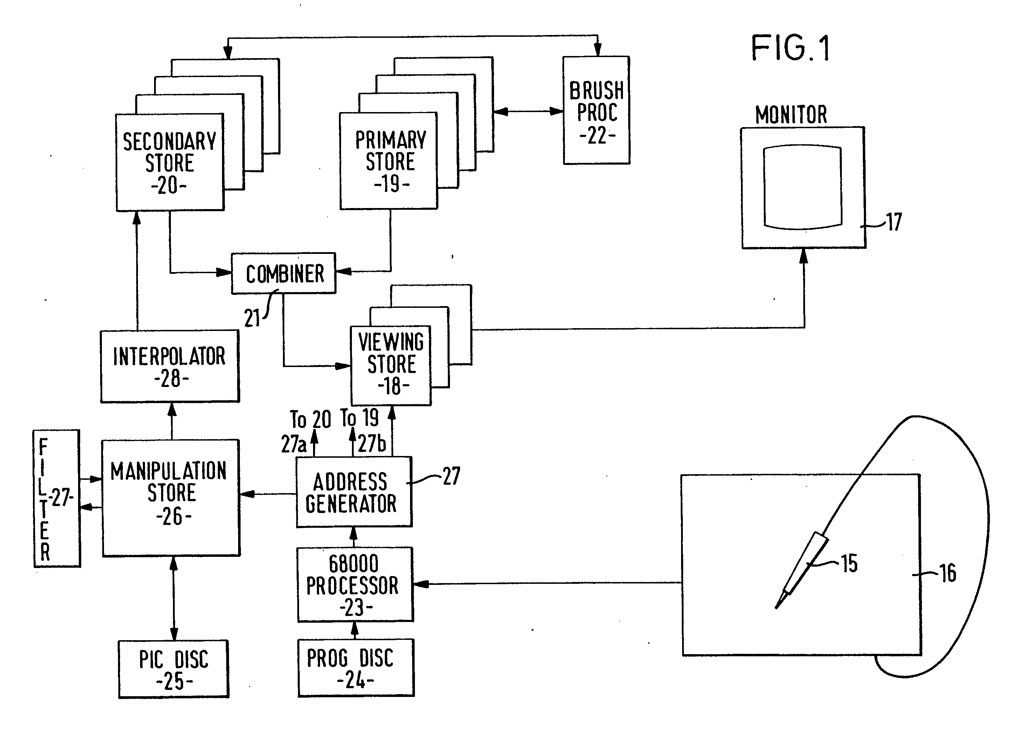

Referring now to Figure 1 of the accompanying drawings, there is shown a high resolution video graphics system in which movement of a stylus 15 over a touch tablet 16 allows an artist to synthesise the operations of conventional artist's implements within an electronic environment. The process is interactive, with many operations being performed effectively in real-time, thereby allowing the artist to view his work on a high definition colour monitor 17. The monitor 17 conforms to the high definition television standard (HDTV) and displays typically 1000 lines scanned at 30 frames per second.

Image data is stored in either or both a primary store 19 or a secondary store 20 in RGB (Red, Green Blue) or CMY (Cyan, Magenta, Yellow) pixel format and a video signal is generated for the monitor 17 by continually reading from a viewing store 18, at video rate, and converting each of the samples to analogue signals which in turn drive respective colour guns of the monitor 17. The primary store 19 and the secondary store 20 are full resolution stores and each will typically have 4000 by 6000 storage locations. Each store 19, 20 comprises four memory planes each eight bits deep for storing colour and other data relating to an image. Three of the planes are used to store colour data and the fourth can be used to store data representing a stencil. If the colour data is stored in CYM format, as is required for most printing processes to produce colour separations in those colours, it is converted to RGB format before being output via the viewing store 18 for display on the monitor 17. A system particularly well suited to converting between CYM and RGB formats is described in detail in our European Patent Application published as EP-A-245,943 and corresponding United States Patent Application No. 308,811 (both claiming a UK priority date of 11 April 1986) the teachings of which are incorporated herein by reference as part of the present disclosure. The resolution of the viewing store 18 is equivalent to that of the monitor 17 with three eight bit planes, one for each colour.

For high quality hard copies or prints of an image, the resolution of a HDTV system is usually not sufficient. Therefore, image creation and manipulation are performed on images having an even higher resolution. In order to enable the user to see his creation, areas of data representing the high resolution image in the primary or secondary store which have been modified by the user are filtered and the filtered data is written to the viewing store 18 for display of the image on the monitor 17. This technique is described in greater detail in United States Patent Application No. 851,125 (claiming a UK priority date of 13 April 1985 and having an equivalent European Patent Application published as No. 202014) assigned to the present Assignee and included herein as part of the present disclosure.

Since the resolution of each of the stores 19, 20 is approximately 4000 lines and since the resolution of the monitor is typically 1000 lines, a combiner 21 is provided to filter the image data from stores 19 and 20 so that for example one new pixel supplied to the viewing store 18 is derived from say a four-by-four patch of sixteen pixels in the primary and/or secondary store 19, 20. The resulting new pixel is written to a location in the viewing store 18, overwriting the pixel previously held at that location.

In addition to the colour data representing the image, each store 19, 20 includes a fourth eight bit data plane defining control data representing a control image or stencil associated with the image. As described in our US Patent No. 4,602,286, the teachings of which are also incorporated herein by reference, stencils can be used to mask images when "painting" and can be used to control the combining or blending of two images. Thus, for example, any part of the image data in the secondary store 20, say, may be defined by way of a stencil for combining with any part of the image data in the primary store 19. The eight bit stencil data can be created on the system using any of the well known facilities available for use in image creation or combination.

The creation of new data in the high definition stores 19, 20 by "painting" colours or by "sticking" cutouts requires more than a mere overwriting process if the introduction of unwanted artefacts which are produced by aliasing is to be avoided. Artefacts can be avoided by way of techniques known as brush stamping, using an interactive read-modify-write process. Such techniques are described in United States Patent 4,514,818 assigned to the present Assignee and included herein as part of the present disclosure.

The abovementioned interactive read-modify-write process involves the use of overlapping brush stamps which are created as the stylus is moved over the touch tablet. Patches of pixels are read from the store modified in accordance with predefined parameters and the thus modified patch of pixels written back to the store. This read-modify-write process is performed in the system of Figure 1 by a brush processor 22.

When a cut-out, that is to say an area of an image in the secondary store 20, is to be stamped into the primary store 19 overlapping recursive stamping is not required (unless selected as a special effect) but the brush processor 22 is still used to control the combining of the cut-out in the primary store 19. New pixel data $p_s$ is stamped into the store in essentially an overwriting process, with the new pixel data being derived from the cut-out data $p_c$ and the data representing the image in the primary store, i.e. the old data $p_o$ in respect to a control value k, thus:

$$Ps = kPc + (1-k)Po$$

The control value k is defined by a stencil or control image held in either or both of the primary and secondary stores. The stencil is a plane of data having values of k defined for each pixel location in the store.

Each plane of colour data in the stores may be processed in parallel with the other two planes or, alternatively, they may be processed sequentially on the same hardware. In either case, the operation is performed in accordance with the read-modify-write equation on a pixel-by-pixel basis, using the corresponding control value k (for each pixel) from the stencil plane.

Operation of the system is overseen by a microprocessor 23, such as a Motorola 68000 or any other suitable proprietary microprocessor, arranged to receive input data from the stylus 15 and touch tablet 16, and program data from a program disc store 24. The disc store 24 may also store text and control data. A separate picture disc store 25 is provided for the bulk storage of the full size high resolution pictures and cut-outs used in the primary and secondary stores 19, 20.

In order to simplify the construction of the primary and secondary stores 19, 20 and of the viewing store 18 these stores are designed to provide only raster sequence access, rather than random access, to the data held therein. However, whilst this design is well suited to the reading of data for display on a raster-type monitor, such as the monitor 17, a problem created by such a design is that it is not particularly suitable for receiving data directly from the picture disc store 25. This is because of the intermittent nature of the transfer of data from a disc store, and therefore a buffer, in the form of a randomly accessible manipulation store 26, is provided. The transfer of data from the disc store 25 is essentially a serial process and in order to reduce the requirement of the manipulation store 26 for randomly accessible memory devices, the manipulation store 26 is arranged to be only eight bits deep, and thirty-two bit images are supplied to the main stores 19 and 20 by sequentially loading the four eight-bit separations from the disc store 25.

The manipulation store 26, is the only truly randomly addressable store in the system and is therefore the only store within the system available for performing image manipulation of the type in which data is addressed randomly in response to a transformation function. The data in the manipulation store 26 is filtered, by a filter 27, so that aliasing does not occur in areas of high compression. The characteristics of the filter 27 are adjusted, in accordance with the degree of compression applied to various parts of the image, so that filtering is not unnecessarily applied to regions of the image.

Image data can be transferred from the manipulation store 26 to the secondary or primary stores. The manipulation store 26 can be arranged to act merely as a buffer in the transfer of data from the picture disc store 25 to the primary or secondary store 19, 20. The manipulation store 26 can also be used in the manipulation of image data, which manipulations effect transformations to the image data as will be described in greater detail hereinafter.

When addresses in the secondary store 20 are calculated in accordance with a transformation the value obtained will be at a higher definition than the actual spacing of store addresses. A spatial interpolator 28 is therefore provided for calculating the value of each output pixel for storing in the secondary store 20 from a weighted average of four adjacent pixels in the manipulation store 26. The weighted contribution of each pixel in the manipulation store 26 to the pixel in the secondary store 20 is determined by the least significant values of the calculated address for each pixel. Interpolation techniques are detailed in United States Patent 4,163,249, now assigned to the present Assignee, and included herein as part of the present disclosure.

The system of Figure 1 is capable of combining data representing a first or background image held in say the primary store 19 with data representing a second or insert image held in the secondary store 20 such that the insert image appears to be placed on a non-planar surface in the background image. As will be described in greater detail hereinafter, the processor 23 is arranged to enable the user to define a non-planar surface in the background image in terms of a grid of tiles in three-dimensional space. Once the grid has been defined and before the insert image is delivered to the secondary store 19, it is divided into a corresponding plurality of tiles and each image tile is transformed to conform with its corresponding tile in the grid.

The program disc store 24 can store a set of predefined transforms representing the transformation of the insert image onto a common three-dimensional surface, such as the surface of a sphere for example. Other three-dimensional objects are difficult to describe in general terms and the system is therefore also arranged to enable the user to define under the control of another program running on processor 23 cross-sections of an object from which a wire-frame model defining the position of each tile may be generated.

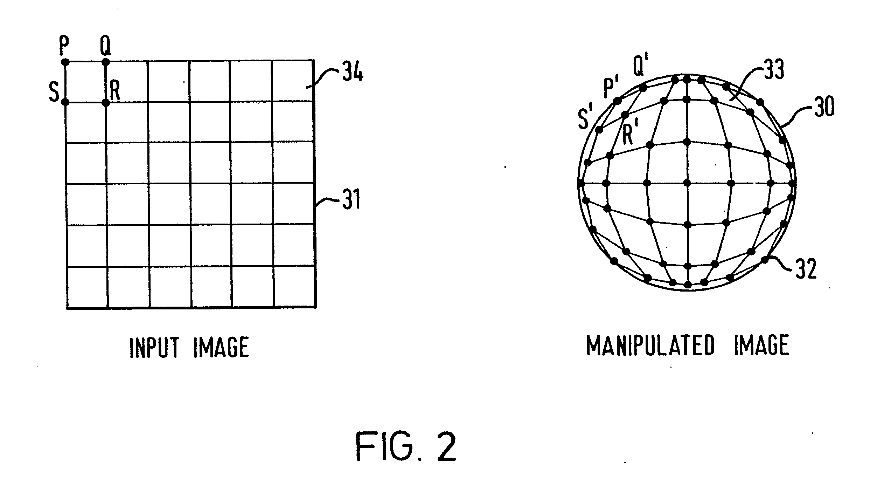

Referring now to Figure 2 of the accompanying drawings, bearing in mind the system shown in Figure 1, it will be assumed that an insert image 31 is to be transformed to appear as if positioned on a spherical object 30 in a background image. Data representing the background image is first written to the primary store 19. The primary store 19 is read continuously by the combiner 21 and the background image data is written to the viewing store 19 for display of the background image on the monitor 17.

With the background image displayed on the monitor 17, the user can define the surface onto which the insert image is to be placed. If the surface is associated with a standard shape such as a sphere, as indeed it is in this example, the user simply uses the stylus 15 on the touch tablet 16 to define the outline of the surface as a control image in the stencil plane of the primary store 19. The combiner 21 is arranged to combine both the image data and the stencil data from the primary store 19 such that as the outline is drawn by the user it is displayed in combination with the background image on the monitor 17.

Once the outline of the surface has been defined to the satisfaction of the user, the appropriate surface is selected from a menu (not shown) of available predefined surfaces, thereby informing the processor 23 that the defined outline represents the outline of a spherical surface. By selecting "create manipulation" from another menu of options (not shown) the user instructs the processor 23 to calculate the parameters necessary to transform the insert image onto the required surface.

The processor 23 interprets what is has been told about the three-dimensionality of the object i.e. that it is spherical, and calculates the intersection of points on a grid notionally placed over the object in three-dimensional space. The grid defines a plurality of grid tiles which may be evenly spaced as preferred for geometric shapes such as spheres, or they may be of irregular form and spacing as preferred for special effects such as breaking glass. Grid points are defined at the intersection of the grid tiles and these grid points are notionally projected back into two dimensions and displayed as points 32 on the monitor 17.

The number of points 32 generated by the processor 23 and thus the number of grid tiles comprising the grid is controlled, within available options, by the user. As will become clearer from the following description, a set of transformation parameters is created for each grid tile and thus the number of grid tiles determines the number of different tile transformations required to achieve the desired insert image transformation. It will be noted that each grid tile forms a planar quadrilateral 33, in this example, though for irregular shapes any other suitable planar polygon may be defined for any or each grid tile 33.

The pixels forming each quadrilateral are derived from an image tile 34 of pixels in the insert image. Typically, each image tile will be say, 64 pixels square with values such as 16, 32 and 128 pixels square being other typically available options. Indeed, image tiles need not be square at all. In the example, the insert image 31 is divided into 36 square image tiles 34, and therefore, thirty six planar transformations are required to perform the desired transformation to the insert image.

During this "create manipulation" stage data is created in the form of a transformation mapping in which for each tile four co-ordinates in the insert image, for example corners P, Q, R, S, map onto four co-ordinates in the manipulated grid, for example corners $P'$, $Q'$, $R'$, $S'$. The transformation of each image tile is defined in terms of the planar transform (1) and (2) as discussed hereinabove, i.e. a transformation which defines manipulation store 26 locations x, y in terms of secondary store locations $x''$, $y''$.

For each image tile transformation the values A to J are defined as values particular to that transformation. Thus, for each tile, the processor 23 calculates a set of nine parameters A, B, C, D, E, F, G, H and J. In addition, the processor 23 also identifies the image pixel tiles which are to be manipulated by each transform and these pixels are preferably stored as tile positions in the output (i.e. manipulated) image.

In addition to defining new manipulation data each time a new manipulation is required, manipulation data may also be stored on the program disc 24. Manipulation data is that data which defines the position of grid tiles, the insert image tiles and the transformations to transform each insert image tile ont its respective grid time. This manipulation data can be stored as sets of mapped co-ordinates or, preferably, it can be stored as a plurality of parameter sets, with each parameter set defining the values of the parameters A to J for each transform, and control data relating each tile to its respective parameter set. In this way, once a particular transformation has been defined for mapping an insert image onto a non-planar surface in a background image, data relating to that transformation can be stored in memory and used when required to combine an insert image and a background image.

Once the three-dimensional grid has been defined to the user's satisfaction the processor 23 is instructed, by way of the user selecting a "use manipulation" option from a menu of options (not shown) displayed on the monitor 17. In the "use manipulation" mode the processor 23 uses the manipulation data created by the user during "create manipulation" to manipulate the insert image data so that it is transformed such that each tile in the image conforms with its respective tile in the grid. On entering this mode, the processor 23 is loaded with the manipulation data. The system is arranged so that the manipulation data, in the form of parameter sets and control data as previously defined during "create manipulation" are held in a local memory (not shown) associated with the processor 23. The background image data, into which the manipulated insert image data is to be stamped, is held in the primary store 19 (and is displayed on the monitor 17 via the viewing store 18). The insert image data is output from the picture disc store 25, and the filter 27 and interpolator 28 are enabled.

The picture disc store 25 is such that it supplies quite large blocks of data as a continuous stream, and therefore the system is arranged so that maximum use of the manipulation store 26 is made when a data transfer from disc store 25 occurs. However, the manipulation store 26 in the present embodiment is only 8 bits deep and therefore the three separations (RGB or CYM) of an insert image must be loaded to different spatial locations within the single plane of the manipulation store 26. Thus, the processor 23 is arranged to perform house-keeping functions which control the transfer of the insert image data separations (RGB or CYM) to discrete locations within the manipulation store 26. The manipulation store will typically be of a similar size to that of a single plane in either the primary or the secondary store 19, 20. Thus, only a portion of the insert image (i.e. no more than one quarter) will be transferred to the manipulation store 26 at any one time. Where only a portion of an image is to be transformed and combined with a background image than the capacity of the manipulation store may be sufficient for all of the necessary insert image data. Where a substantial portion or the whole of an image is to form the insert image, the "use manipulation" operation is performed in stages on areas of the insert image with the manipulated areas being combined when they are subsequently delivered to the secondary store 20. In the present example it will be assumed that each of the thirty six image tiles is 64 pixels square and that all three separations (RGB or CYM) can be stored in the manipulation store 26 with additional space for stencil data associated with each of the insert image tiles.

In order to combine each insert image tile with the background image a control image or stencil is required. The control image defines a set of stencil tiles, with each stencil tile being associated with a respective insert image tile. Stencil data is not read from picture disc store 25 but instead the stencil tiles are calculated by the processor 23 before being delivered to the secondary store 20 for use in stamping the manipulated insert image data into the primary store 19.

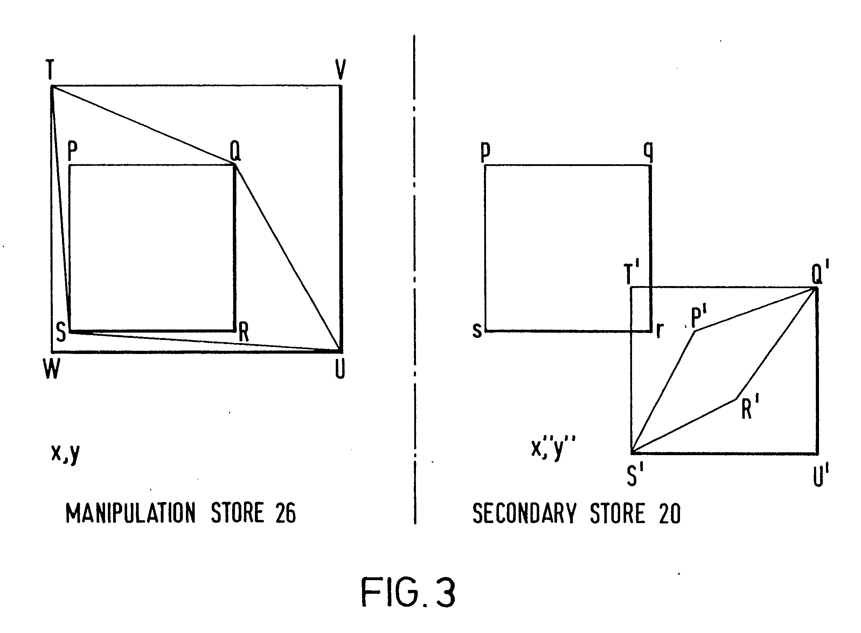

The manner in which stencil tiles are created and are subsequently used in the stamping of insert image data into the background image data in the primary store 19 will be described with reference to Figure 3 of the accompanying drawings. Figure 3a shows a first tile associated with the insert image as a square PQRS. The first tile PQRS is to be transformed so that it becomes a tile $P'Q'R'S'$ in the manipulated insert image for combination with the background image. Also shown in Figure 3 is a square pqrs which represents the position that the tile $P'Q'R'S'$ would occupy in the background image if it was transformed under an identity transformation. However, as can be seen from both Figure 2 and Figure 3 the tile PQRS undergoes a substantial transformation in order to produce the desired result.

The tile $P'Q'R'S'$ is the tile that will be stamped as manipulated image data in the primary store 19. However, before this can be done, each of the insert image colour separations, together with a stencil, must be built-up in the secondary store 20. With the three separations for each of the thirty six insert image tiles stored in the manipulation store 26 there is space left over for the storing of stencil data. The processor 27 reads the manipulation data from its local memory (not shown) for this first tile PQRS. The manipulation data consists of the parameter data A to J for a planar transform and the co-ordinate locations of points $P'$, $Q'$, $R'$, and $S'$ in the secondary store 20.

The addressing of the primary store 19 and of the secondary store 20 can only be performed in a raster sequence though it is not necessary to scan in raster order the whole of the stores 19, 20. The processor 23 is therefore arranged to control the address generator 27 so that it generates a raster sequence covering only an area of the stores 19 or 20 which sequence is output along lines 27a and 27b. A first pixel position is supplied to the address generator 27 together with an identification of the number of lines and the number of pixels along the line and in this way the scanned areas of the stores can be limited to a defined area.

Although the pixels in the area in the primary store 19 defined by the irregular quadrilateral $P'Q'R'S'$ cannot be addressed directly, a rectangular area $T'Q'U'S'$ bounding said quadrilateral can instead be addressed, rather than addressing the whole of the image store. From data identifying the points $P'$, $Q'$, $R'$, and $S'$, the processor 23 calculates the corner points $T'$, $Q'$, $U'$, and $S'$ of a bounding rectangle.

Once the boundary rectangle $T'Q'U'S'$ has been defined the corner points of the manipulated quadrilateral $P'Q'R'S'$ and the corner points of bounding rectangle $T'Q'U'S'$ are subjected to the reverse transformations (3) and (4) so as to identify the co-ordinates of points T and U in addition to the already known co-ordinates of the points P,Q,R and S. In this example, only six co-ordinates are required but in general a transformation may include rotation of the image and so the position of eight points may need to be determined.

The calculated locations P to U in the original image can be adjusted for the particular colour separation (RGB) being processed. In this example it will be assumed that the stencil is calculated first. A stencil must be created which allows data within quadrilateral $P'Q'R'S'$ to be stamped while not affecting the other data within rectangle $T'Q'U'S'$ are addressed when insert image data is written into the primary store 19, the stencil ensures that RGB pixels outside the region $P'Q'R'S'$ are not actually modified by insert image data. A region of the manipulation store 26 is selected by the processor 23 for creating and storing stencil data for the first tile PQRS, and co-ordinates corresponding to the points P, Q, R, S, T, and U are identified in the selected region. With the points P to U identified all storage locations of the manipulation store 26 within the TQUS quadrilateral are set to zero. This is done by defining another bounding rectangle TVUW and setting the data at all storage locations within TVUW to zero, a process requiring minimum instructions. Alternatively suitable set values could be loaded directly from the disc store 25. The reverse process of setting values to unity is then performed on the data at all storage locations within the rectangle PQRS. This results in a stencil being defined within the area bounded by the square PQRS such that as the stencil data is transformed a corresponding stencil is defined as bounded by the quadrilateral $P'Q'R'S'$ with values outside that quadrilateral being set to zero. In order to provide a smooth transition between stencil values inside and outside the bounded area, and thereby to avoid aliassing in the final image, the stencil data in the manipulation store 26 is filtered by the filter 27 so that the edges of the stencil $P'Q'R'S'$ are soft with intermediate values between zero and unity.

Once the stencil has been created in the manipulation store 26, the manipulated insert image portions are built up, plane-by-plane, in the secondary store 20. A rectangular region is selected in the secondary store 20 corresponding to the rectangular region $T'Q'U'S'$ and data is written into the selected region. The first pixel to be transformed is that at position $T'$. The $x''$, $y''$ co-ordinates for this position are derived by entering the co-ordinates of T into the planar transform equations. The raster position of the original image is then increased to give an address of $(x+1, y)$ i.e. the position of $T'$ plus one pixel increment along the line. The result of putting these co-ordinates into the transform equation is to obtain the co-ordinates of a point somewhere along the line $T'Q'$. This will probably not match up exactly with an actual location in the secondary store 20 and in the event that it does not match exactly the four pixels at locations adjacent to the calculated location in the manipulation store 26 are output and are interpolated by the interpolator 28, with interpolation weightings being defined by the least significant digits of the calculated co-ordinate address. Alternatively, better results may be obtained by addressing a patch of four-by-four pixels in the vicinity of the calculated location and supplying the pixels at these locations to a bi-quadratic interpolator. Thus, in writing data to addresses within the region $T'Q'U'S'$ of the secondary store 20, data within the region TWUS are read from the manipulation store 26 and the result, for the stencil, is that all pixel values at addresses within the region $P'Q'R'S'$ in the secondary store 20 are set to unity and all pixel values at addresses within the region $T'Q'U'S'$ but outside $P'Q'R'S'$ are set to zero except for pixels at addresses along the boundary of $A'B'C'D'$ which have intermediate values.

Once the stencil has been created in the secondary store 20 the outputting of image data from the manipulation store 26 is off-set, so that the three colour separations RGB or CYM of the insert image are manipulated one at a time. For each colour separation, image data is written to the whole of a rectangular area of the secondary store 20 similar to $T'Q'U'S'$. The image data in the area lying outside the quadrilateral $P'Q'R'S'$ will be discarded under the control of the corresponding stencil as previously created when the image data is stamped into the primary store 19.

As previously stated, compressing the image may introduce artefacts if the data is not prefiltered and therefore the filter 27 is arranged to filter all insert image data and to write it back to the manipulation store 26. The characteristics of the filter 27 are modified for each tile of the insert image, using coefficients determined from the transform parameters A to J of each tile. The coefficients are actually derived from the inverse of the transform parameters and the system can therefore readily calculate these parameters or can store them along with the manipulation data.

Once all of the manipulated data for the separations of the insert image have been built up in the secondary store 20, each manipulated tile is stamped into the primary store 19 at the position in the primary store 19 previously identified by the operator. Thus, each separation of the insert image data within the region $T'Q'U'S'$ of both the secondary store 20 and the corresponding region of the primary store 19 are supplied from the stores to the brush processor 22. In areas where the derived stencil data in the secondary store 20 is unity, the pixel value of the insert image (for all three colour separations) replaces the pixel value previously in the primary store 19 and in areas where the stencil data is zero (i.e. in areas outside $P'Q'R'S'$) the background image data is left unaltered. Where for a given pixel location the stencil data has an intermediate value, blending of the background image pixel and the insert image pixel occurs.

Once all data for an insert image tile has been stamped into the primary store 19, the process is repeated for the next tile and so on for all tiles until a complete image has been built up. In normal operation, the image in the primary store 19 is displayed on the monitor 17 and therefore the manipulated image can be seen being created tile-by-tile. The operation of the stencil, read from the secondary store 20, may be modified by another stencil signal from the primary store 19, for example to cause the manipulated insert image to appear in front of some aspects of the main image and behind others. Pixels at the boundaries between insert image tiles are actually included in both tiles as stamped into the primary store 19 and all four tiles at a corner, and are therefore stamped more than once. This overlap is required to avoid partial transparencies at tile edges, which partial transparencies would occur because of the soft edges of the stencils. The overlap may be increased so that there are say three or more pixels of overlap by increasing the softness of the stencil edges.

The system described with respect to Figures 1, 2 and 3 uses planar transformations in a read-side process in a way which greatly extends a family of possible effects available by the technique.

The machine manufactured by the present Assignee and sold under the trade mark ENCORE as previously mentioned herein operates on consecutive fields of video at video rate. All pixels within each field are manipulated in accordance with the same transformation but the transform parameters may vary on a field-by-field basis to create the effect of a moving plane of live video.

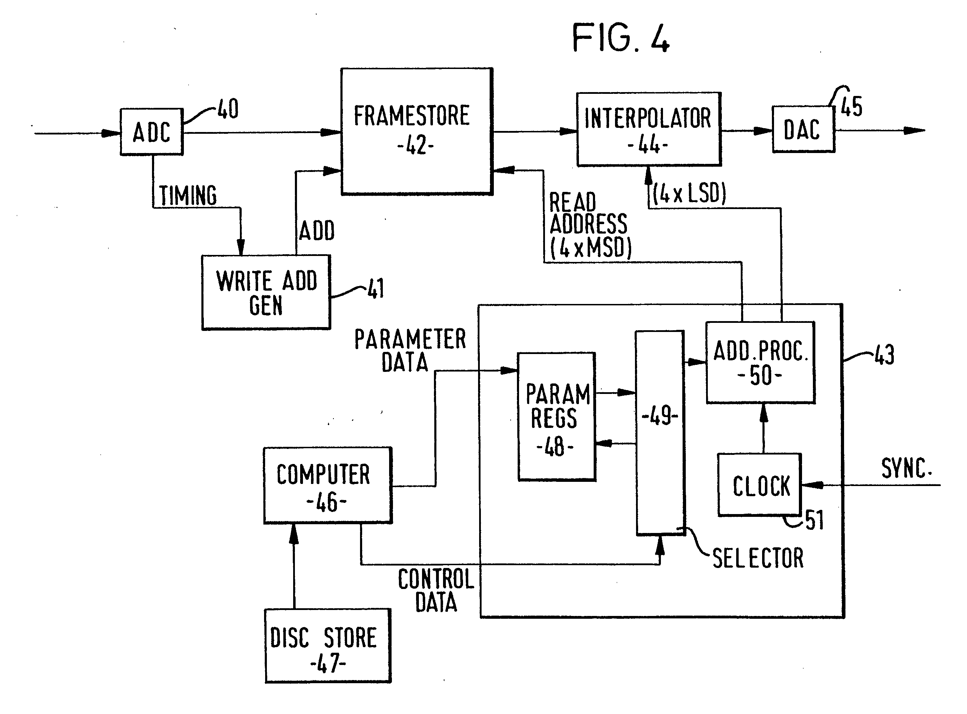

A second embodiment of the invention for use in manipulating live video data is shown in Figure 4 of the accompanying drawings. The system shown in Figure 4 is arranged so that for each frame of an input video clip the image is divided into a plurality of regions or tiles, with location addresses for each region or tile being derived in accordance with a respective transformation from a corresponding plurality of available transformations. A constraint is placed upon the operation of the system such that each manipulated input frame must be generated at video-rate, so that a sequence of such manipulated input frames can be produced in real-time. The system of Figure 4 is therefore implemented in a different way to that of the above described first embodiment, in that stored input image pixels are manipulated in an order corresponding to that of the output raster sequence and transformations are selected on a pixel-by-pixel basis in response to control data.

A video signal to be manipulated is input to an analogue to digital converted (ADC) 40 and timing signals associated with the input video signal are also output from the ADC 40 to a write-address generator 41 which produces write-addresses which are used to control the writing of the digitised video data from the ADC 40 to a framestore 42 in raster order. The framestore 42 is a broadcast-video device and thus consists of two field stores arranged such that while one filed of video data is being written to one of the stores in raster order another previously stored field is being read randomly from the other of the two stores by a read-address generator 43. The read-address generator 43 identifies the addresses of stored pixels which are required to create the desired output image in raster. As will become clear from the following description, the read-addresses are calculated by the read-address generator 43 at a higher definition than that of the storage locations in the framestore 42. Therefore, for each output pixel, a two-by-two or four-by-four block of read-addresses is calculated by the read-address generator 43. The most significant digits of the calculated addresses are then used to address the framestore 42 and the least significant digits of the calculated addresses are output to an interpolator 44 for use as weighting coefficients. Each set of four, or sixteen, image pixels is read from the framestore 42 at video rate and input to the interpolator 44. The interpolator 44 performs a calculation on the pixel data by combining the pixel values in accordance with a weighted sum determined by the least significant digits of the calculated addresses from the read-address generator 43. The calculation performed by the interpolator 43 results in data representing one output pixel which is supplied to a digital to analogue converter (DAC) 45 for storage or display on a monitor (not shown).

The calculation of manipulation data is performed on a suitably programmed microprocessor-based computer 46, having an associated disc storage system 47. In operation, transformation parameter data A to J is supplied to the read-address generator 43 for an odd numbered field in the video clip while control data is being supplied in say run-length encoded form on a pixel-by-pixel basis for an even numbered field in the video clip. Alternatively, in systems where the above described double buffering arrangement is not available, the parameter data A to J can be supplied during the blanking periods of the video signal.

As in the above described embodiment the image data to be transformed is divided into a plurality of tiles or image portions and a set of parameters is calculated for each tile. However, since in this embodiment the transformation is to be applied to live video to achieve a particular effect, parameter sets are calculated for each frame in the video clip. Thus, by defining different parameter sets for the tiles for each video frame, the input video can be manipulated so that it appears to move in space between one frame and the insert. Once calculated by the computer 46 the parameter data for each tile in the current frame is transferred to the address generator 43 and stored in randomly addressable parameter set registers 48. The computer 46 supervises the operation of the address generator 43 by generating control data which is output to a selector 49. In response to the control data, a parameter set is selected by the selector 49 and supplied to an address selector 50.

In addition to receiving manipulation data (i.e. parameter set data and control data), the address processor 50 also receives clock signals from a clock 51, which identifies the current $(x'',y'')$ co-ordinate in the output video raster in normal raster sequence. The address processor 50 generates from the current $(x'',y'')$ address and the selected parameter set a read-address $(x,y)$ in the framestore 42 from which stored pixel values are read for interpolation by the interpolator 44. The clock 51 may also be synchronised to external equipment, so that the output manipulated video signal is generated in the correct phase for the external equipment.

The calculations performed by the address processor 50 may all relate to the above planar transforms (3) and (4), in which case nine parameters are required for each parameter set. Furthermore, different types of manipulations may be performed so that, for example, both the x and the y planar transform equations have a common denominator. Therefore, in general planar transforms are a sub-set of a more general set of transformations defined as follows:

$$x = \frac{ax'' + by'' + c}{gx'' + hy'' + j}$$

$$y = \frac{dx'' + ey'' + f}{kx'' + ly'' + m}$$

where $x''$ and $y''$ are the co-ordinates of a display location and x and y are the co-ordinates of corresponding framestore locations.

Other transformations may have terms in xy or even terms in x or y raised to a power. Furthermore, different tiles or image regions of the input image could be manipulated in accordance with different equations, in which case the address processor 50 would be programmed with all the expressions used for a manipulation and the parameter set data would include an indication of the particular expression to be used for that set of parameters. However for the sake of simplicity the current example uses the same mathematical expression for all tiles or image regions, but since the address processor 50 is arranged to handle the generalised planar transformations detailed above, the address processor 50 requires twelve parameters to be stored for each parameter set.

The calculation of manipulation data for each frame of the required output video image is usually performed off-line and, by storing it in the disc store 47, effects may be used many times without the need to recalculate the manipulation data each time. The software for producing the manipulation data is similar to know three-dimensional graphics programs, in which an object (defining a manipulation) is displayed on a visual display unit (VDU) as a "wire-frame". Thus, in a page turn effect for example, each video frame of the effect modelled as lines connecting nodes, in which each area thereby defined becomes a tile for which transformation parameters are calculated.

Once the wire frame has been created, the tiles may be shown more clearly by shading each tile with a different colour. The system is capable of storing up to 256 sets of transform data and therefore the positions of up to 256 tiles may be defined. In this case up to 256 different colour shades are required in order to shade each tile with a different colour. The wire frame model is created by the manipulation of the image tiles in three-dimensional space. This manipulation does not require a large amount or processing power because only the position of each node in the wire frame is stored, unlike manipulating a full frame of video in which every pixel in the video frame must be stored. The manipulation calculating software is therefore capable of producing mappings of input points $(x, y)$ to output points $(x'', y'')$ from which the transformation parameters for each tile are calculated.

Unlike the previously described embodiment, the system of Figure 4 outputs via the DAC 45 a full frame of data in raster sequence. The control data from the computer 46 does not therefore identify the positions fo the tiles, which (as previously described) are obtained from the co-ordinate mappings, but instead it identifies a particular transform for each pixel in the output raster scan. The resulting image produced by the system and consisting of a plurality of planar tiles is therefore scanned out of the system in raster order for display.

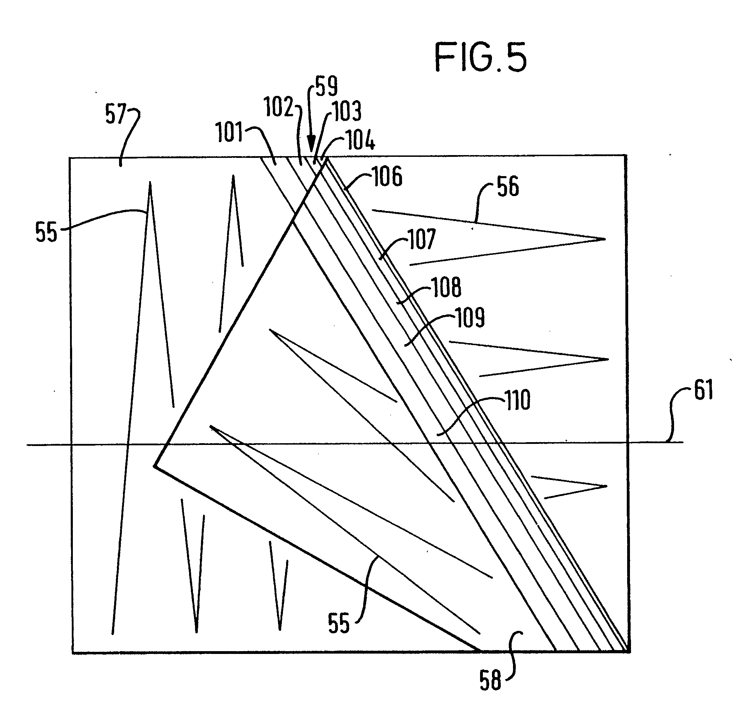

An example of a video effect which can be produced by the system of Figure 4 is shown in Figure 5 of the accompanying drawings. The effect is known as a page turn and in this effect a first real-time video image 55 appears as if on a page of a book which is being peeled back to reveal a second real-time video image 56. Figure 5 shows a typical video frame in a sequence of frames which make up the effect. In each frame the moving page is modelled as a first plane 57 representing the front or unturned portion of the page, a second plane 58 representing the back or turned portion of the page and a cylinder portion 59 connecting the planes 57 and 58. The planes 57 and 58 are both parallel to the plane of the screen. The manipulation of points to create the plane 58 is achieved by a reverse planar transform defining store locations $(x, y)$ in terms of display locations $(x'', y'')$ as discussed hereinabove. Over the cylinder portion 59, the manipulation of the corresponding region of the first video image is more sophisticated and is achieved by modelling the cylinder 59 as a plurality of thin planar strips 101 to 110 running parallel to the axis of the cylinder. The strips comprising the cylinder portion 59 are defined in a similar manner to that of the above discussed tiles. The cylinder portion 59 is defined as a plurality of planar strips sufficient in number to give the appearance of a smoothly curved surface, for example ten planar strips. This gives a total of twelve planes, the two planes 57 and 58 defining the front and back of the page and the ten planar strips 101 to 110 defining the cylinder portion 59 and therefore the effect requires twelve planar transformations for each frame of the required output video image. The system of Figure 4 is capable of storing 256 sets of transform data in the parameter registers 48 and therefore a far greater number of strips may be used to create the cylinder if required. However because the system allows individual image portions or strips of irregular unrelated shape or size to be defined a larger number of smaller strips can be used to model areas having more detail or the greatest rate of change, and fewer strips of larger size can be used to define areas having areas of less detail or the least rate of change. Thus, for the cylinder portion 59 of Figure 5, planar strips nearer to the planes 57, 58 can be defined to be broader than strips nearer to the trailing edge of the cylinder.

In a typical scan line 61 the tiles 57, 58, 110, 109, 108, 107, 106 and then the background will be crossed in that order. The control data generated by the computer 46 whilst the line 61 is being scanned will start with an indication of the first tile in the line 61, in this case tile 57, followed by a run length code indicating the number of output pixels to be derived for tile 57. Next, tile 58 is specified, followed by run length code for that tile, and so on until the second video image tile and the end of the line is reached. All scan lines consist of a fixed number of pixels and therefore a code indicating the end of each line is not necessarily required, though an end of line code may be included in the control data if desired in order to mitigate the effects of data corruption. Thus, for each frame, every line is scanned to produce control data and each frame scanned in this way represents a field of video lines. The process is then repeated for the next field of the video with data relating to differently shaped tiles in different positions.

The page turn effect may take, for example, five seconds to run from beginning to end and if the effect is defined for a monitor operating in accordance with, say, the NTSC television standard, the effect will consist of 300 video fields. In this case, the disc store 47 will contain manipulation data for each of the 300 fields in the form of parameter sets and control data for each tile comprising the effect. On initiating the effect, parameter sets for each tile (up to 256) of the first frame are supplied by the computer 46 to their respective parameter sets registers 48. Control data, from the computer 46, are then supplied to the selector 49, in phase with the supply of clock signals to the address processor 50 and the address processor 50 calculates the output address, together with the interpolation data, to produce the four read-addresses for calculation by the interpolator of the interpolated output pixel. As the output address is incremented by the clock 51, thereby to define the next pixel in the output raster, control data continues to be supplied to the selector 49 thereby enabling the selector 49 to select new parameter data for the next tile in the current scan line when required. The address processor 50 obtains parameter data by reading the output of the selector 49 and does not require re-programming when new tiles are to be processed, because this is automatically dealt with by the parameter selector 49.

It should be clear from the foregoing that, unlike the previously described embodiment, tiles do not actually overlap, so each output pixel only belongs to one tile. The production of overlapping tiles to give soft edges is possible by scanning each tile separately in a similar way to that performed in the first embodiment. To achieve this, the image must be built up in a second framestore (not shown) and the speed at which data is read and processed from the first framestore must be increased so that the second framestore can be read at video rate.

Having thus described the present invention by reference to preferred embodiments it is to be well understood that the embodiments in question are exemplary only and that modifications and variations such as will occur to those possessed of appropriate knowledge and skills may be made without departure from the spirit and scope of the invention as set forth in the appended claims and equivalents thereof.

## Claims

1. An electronic image processing system in which image data is divided into a plurality of regions, image data associated with each of said regions is transformed in accordance with a respective set of transformation data to produce data representing a transformed image region, and the data representing the transformed image regions are combined to produce transformed image data representing a transformed image which conforms with a non-planar surface.

2. An electronic image processing system as claimed in claim 1, wherein the transformation data is calculated by defining a planar grid defining a plurality of tiles representing the plurality of image regions, manipulating the grid in three-dimensional space to conform with the desired non-planar surface, and calculating for each tile in the grid the three-dimensional planar transform required to cause the tile to occupy the manipulated position in three-dimensional space.

3. An electronic image processing system as claimed in claim 1 or 2, wherein each of the image regions is substantially square.

4. An electronic image processing system as claimed in claim 1 or 2, wherein at least some of the image regions are defined as elongate quadrilaterals.

5. An electronic image processing system as claimed in any of the preceding claims, wherein the data representing the transformed image regions includes stencil data associated respectively with the transformed regions.

6. An electronic image processing system as claimed in claim 5, wherein the stencil data for each transformed image region is calculated as each image region is transformed.

7. An electronic image processing system as claimed in any of the preceding claims, wherein the transformed image data is combined with further image data representing a background image.

8. An electronic image processing system as claimed in any of the preceding claims in which the image data represents one or more image frames from a plurality of image frames in a video clip.

9. An electronic image processing system as claimed in claim 8, wherein each image frame in the video clip is processed in accordance with its own sets of transformation data thereby to produce differently transformed images for each image frame.

10. An electronic image processing system as claimed in claim 8 or 9, wherein the sets of transformation data are calculated off-line and are delivered to the system in run length encoded form.

11. A method of manipulating an electronically stored image to produce an output image by reading data from a randomly accessible storage device, wherein said output image is divided into a plurality of regions and image data for each of said regions is obtained from said stored data at addresses determined by transform parameters selected from one of a plurality of available parameter sets.

12. A method according to claim 11, wherein stored control data defines the relationship between parameter sets and co-ordinate locations.

13. A method according to claim 11 or 12, wherein each set of transform parameters consists of the twelve parameters of a generalised planar transform or the nine parameters of a planar transform.

14. A method according to claim 11 or 12 or 13, wherein pixels are manipulated on a tile-by-tile basis in which a set of transform parameters are selected for a particular tile and all pixels within the selected tile are manipulated before the next parameter set is selected.

15. A method according to claim 11 or 12 or 13, wherein pixels are manipulated on a line-by-line basis

EP 0 399 663 A1

in which parameter sets are selected on a pixel-by-pixel basis in response to control data.

16. A method according to claim 15, wherein parameter sets for a plurality of frames are available and the image data is manipulated at video rate to produce real-time video effects.

17. An electronic image processing system comprising:

a store defining an array of randomly addressable storage locations for storing pixels representing an image;

reading means for reading pixels from the store by addressing the storage locations and for outputting pixels in raster address sequence;

defining means for defining a plurality of image tiles associated with a corresponding plurality of patches of said output raster addresses, and for defining a parameter set for each image tile which parameter set defines a three-dimensional transform for transforming each raster address in a patch into a transformed address;

selecting means for selecting for each output raster address a parameter set relating to a desired three-dimensional transform to be performed on the raster address; and

transforming means for transforming the raster address to produce a transformed address in accordance with the selected set of parameters for identifying a store address;

and wherein said reading means is arranged to read pixels from store locations addressed by said transforming means such that pixels output therefrom represent the image on a non-planar surface.

18. An electronic image processing system as claimed in claim 17, wherein the store comprises a framestore for storing at least two fields of a video sequence and is arranged such that whilst pixels comprising one field are being read from the framestore by the reading means, pixels comprising the next field to be processed are being written to the framestore.

19. An electronic image processing system as claimed in claim 17 or 18, wherein the transforming means comprises an address processor responsive to parameters in the parameter set selected by the selecting means for calculating a patch of store addresses associated with the transformed address.

20. An electronic image processing system as claimed in claim 19, in which pixels at the locations corresponding to the calculated patch of addresses are combined by an interpolator to produce an output pixel for display.

21. An electronic image processing system as claimed in claim 20, wherein the address processor further calculates interpolation coefficients for use by the interpolator in combining the pixels at the patch of addresses.

22. An electronic image processing system as claimed in any of claims 17 to 21, further comprising an analogue to digital converter for converting video signals from an external source into digital form for storage in said store.

23. An electronic image processing system comprising:

(a) an input source of pixels relating to successive addresses in an input raster;

(b) a store having an array of addresses for storing said pixels;

(c) a source of signals defining a multiplicity of tiles containing different patches of said raster addresses;

(d) a source of sets of parameters which respectively define three-dimensional transforms for the raster addresses contained in different tiles;

(e) means for selecting the respective parameter set for the tile containing the address of a pixel input from said input source;

(f) transforming means responsive to the selected parameter set for deriving the three-dimensional transform of the raster address of each input pixel in the respective tile; and

(g) means for writing said input pixel at the address in said framestore means identified by the respective transform, whereby an image represented by pixels input from said input source can appear to be transformed onto a three-dimensional surface.

24. An electronic image processing system as claimed in claim 23, wherein the tiles are shaped so that the three-dimensional transform of the respective patch of the raster addresses is rectangular to access serially the rectangular patch of raster addresses.

25. An electronic image processing system as claimed in claim 23 or 24, wherein adjacent ones of said tiles substantially overlap, and stencil means is provided to prevent over-writing of pixels at addresses in said framestore means.

26. An electronic image processing system as claimed in claim 25, wherein said stencil means is derived from the parameter set for each tile by the transforming means.

27. An electronic image processing system as claimed in any of claims 23 to 26, wherein the store comprises a random access framestore providing a two-dimensional array of addresses.

28. An electronic image processing system as claimed in any of claims 23 to 27, wherein the transforming means comprises an address generator controlled by a processor.

29. An electronic image processing system as claimed in any of claims 23 to 28, further comprising a first image store for storing pixels representing a background image and a second image store for storing transformed pixels representing the transformed image and combining means for combining pixels from the primary and secondary stores for display.

FIG.1

EP 0 399 663 A1

INPUT IMAGE                    MANIPULATED IMAGE

FIG. 2

EP 0 399 663 A1

x,y

MANIPULATION STORE 26

x,"y"

SECONDARY STORE 20

FIG.3

EP 0 399 663 A1

FIG. 4

ADC -40-

TIMING

WRITE ADD GEN -41-

ADD

FRAMESTORE -42-

READ ADDRESS (4 x MSD)

INTERPOLATOR -44-

(4 x LSD)

DAC -45-

-43-

ADD. PROC. -50-

CLOCK -51-

SYNC.

SELECTOR

-49-

PARAM REGS -48-

PARAMETER DATA

COMPUTER -46-

CONTROL DATA

DISC STORE -47-

FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 280 316 (SONY) * Page 3, lines 2-33; page 6, lines 55-58; page 7, line 1; page 9, lines 37-39,46-48; claims 1,3 * | 1-4,11, 12 | G 06 F 15/72 |
| Y | | 1,7,10, 17-22, 23-29 | |
| Y | EP-A-0 221 704 (SONY) * Page 2, lines 1-4,11,12,45-47,22-34; page 3, lines 53-56; page 4, lines 21-28; page 5, lines 30,31,38-43; page 9, lines 32-34; claims 4,12,13 * | 1,7,10, 17-22, 23-29 | |

TECHNICAL FIELDS SEARCHED (Int. Cl.5)

G 06 F 15/62
G 06 F 15/72

The present search report has been drawn up for all claims

| Place of search | Date of completion of the search | Examiner |
|---|---|---|
| THE HAGUE | 24-08-1990 | GONZALEZ ORDONEZ O. |